# EUROPEAN PATENT SPECIFICATION

(11) **EP 0 723 489 B1**
(45) Date of publication and mention of the grant of the patent: **28.05.1997**
(21) Application number: 94929633.9
(22) Date of filing: 13.10.1994
(51) Int. Cl.: B23D 15/06

(54) **ROTARY SHEARING MACHINE WITH OPPOSED BLADES THAT ROTATES AS DESIRED AROUND GEOMETRICAL AXES SUBSTANTIALLY ORTHOGONAL TO THE CUTTING PLANE**
FLIEGENDE SCHERE MIT ORTHOGONAL ZUR SCHNEIDFLÄCHE EINSTELLBAREN SCHNEIDMESSERN
CISAILLE GUILLOTINE A LAMES OPPOSEES TOURNANT à LOISIR AUTOUR D'AXES SENSIBLEMENT PERPENDICULAIRES AU PLAN DE COUPE

(30) Priority: 15.10.1993 IT MI932202
(43) Date of publication of application: 31.07.1996
(73) Proprietor: SALICO SRL, I-22040 Sirone (IT)
(72) Inventor: SALVIONI, Carlo, I-22062 Barzanò (IT); COLOMBO, Giordano, I-22040 Ello (IT)
(74) Representative: Filippi, Remo
(86) International application number: IT9400170
(87) International publication number: WO9510381

(56) References cited:
- FR-A- 460 214
- GB-A- 715 793
- US-A- 4 942 797

## Description

The invention concerns guillotine shears according to the precharacterising portion of claim 1, namely those shears that have at least one mobile blade, on guides, governed by kinetic means to ensure rectilinear motion.

The blade is generally worked by eccentric devices or by hydraulic controls.

In one improved model two opposing blades translate one towards the other each parallel to itself and to the opposing blade, describing equal trajectories around parallel geometrical axes lying on the same vertical plane.

Blade movement is obtained by a double pair of cranks connected by suitable kinetic means to ensure synchronization.

Clearly with such devices it is possible to operate solely on metal sheets or bands making a single cut at a constant angle substantially orthogonal to the movement of said sheets or bands.

Purpose of the above invention is to permit a cut to be made at any angle desired and therefore to produce various polygonal shapes such as squares, rectangles, triangles, trapezoids, rhomboids and others, which is achieved by a guillotine shearing machine having the features of claim 1.

Subject of the invention is a guillotine shearing machine on which one or more blades are mounted on structures that translate cyclically in relation to the cutting plane on which the sheets and bands to be cut are laid or on which they translate.

The blade or blades are fixed to the translating structures by an intermediate body that rotates around a geometrical axis substantially orthogonal to the cutting plane.

The cut can thus be orientated as preferred on the cutting plane at a constant angle for a run of the same or varied cuts.

The intermediate body is rotated by a ratiomotor controlled by an electronic drive unit containing a preferred program.

In one advantageous solution there is a pair of opposing blades, one below and one above, respectively fixed to an upper and a lower structure.

Translation of said blades is synchronized, each one parallel to itself and to the opposite one, describing equal circular trajectories around geometrical axes lying on the same vertical plane and meeting close to the cutting plane.

Rotation of the intermediate bodies between the translating structures and the blades takes plane in synchrony on a single geometrical axis orthogonal to the cutting plane.

The two translating structures,on which the upper and lower blades are respectively mounted, assume a form that is substantially U-shaped and lie longitudinally with a horizontal central bar and vertical sides.

Said sides face upwards in the structure on which the lower blade is mounted and downwards in that carrying the upper blade.

The intermediate bodies rotate on roller gears inserted between said intermediate bodies and corresponding seats made on the central horizontal bar of the structure.

Said intermediate bodies are rotated by a ratiomotor and a kinetic pair obtained from a pinion fixed to the shaft of the ratiomotor and crown gears fixed to said bodies.

Movement of each translating structure on which the blades are mounted is obtained by two pairs of cranks.

One pair of cranks acts on one side of the structure;
the other pair acts on the other side of the same structure.

The cranks in each pair, front and rear in relation to the front plane of the machine, are connected one to another by gear wheels fixed to said cranks and to an intermediate idling gear wheel.

Both axes of rotation of the two pairs of cranks, acting on each oscillating structure, lie on the same horizontal geometrical plane.

The pair of cranks on the lower translating structure are connected by gear wheels, one to another and to a longitudinal shaft which ensures their synchronized movement, said shaft being in turn connected to a ratiomotor.

The gear wheels fixed to the front cranks of the pairs on the lower translating structure respectively mesh with those fixed to the front cranks of the pair on the upper translating structure. The gear wheels fixed to the rear cranks of the pair on the lower translating structure respectively mesh with those fixed to the rear cranks of the pair on the upper translating structure.

Rotation of the intermediate bodies on the upper and lower blades is synchronized by bars fixed to the two sides of said bodies, said bars being free to slide inside the guides made in the two sides of the other body.

The cutting plane, where sheets or bands to be cut lie or translate is formed of a feeder having a set of oblong supporting devices, parallel and side by side, that slide axially controlled by kinematic devices synchronized with the structures that determine horizontal translation of the blades and with intermediate rotating bodies that cause rotation of said blades.

Said kinematic devices determine the relative axial movement of said oblong devices so that the edge of the cutting plane obtained, near the blades, lies parallel moment by moment with the blades when the cut is made.

The effect of this is to give support to the material for cutting close to the blades but without any interference with said blades.

Each oblong supporting device consists of feeder bars at whose bladeward end is a pulley and at whose other end is an arm that supports a second pulley which is placed at a lower level than the first pulley.

At this latter end is a frame that supports a third pulley at a horizontal distance comprised between the first and second pulleys, then a fourth pulley at the same level as the first pulley but further back than the second pulley, and a fifth pulley at a lower level than that of the fourth pulley fixed to the horizontal shaft of the ratiomotor common to all the devices.

A continuous band is placed round the first, third, fourth and fifth pulleys while said band surrounds the second pulley externally. In this way said bars can make free axial translations since a lengthening of that part of the band that surrounds the first pulley involves an equivalent shortening of band that surrounds the second pulley.

A feed mechanism determines axial translation of said bars in such a way that the first pulleys are aligned, moment by moment, at the level of the cutting plane, the blades following both horizontal and rotational translating movements.

The feed mechanism comprises a rectilinear horizontal channel-shaped guide open above and fixed to an orthogonal shaft freely turning in a horizontally sliding support.

Freely lodged within this guide are pins fixed to the lower side of each of the above bars.

From one moment to the next horizontal translation of said sliding support is made by the structure causing the blades to translate horizontally.

Rotation of the channel-shaped guide is obtained by rotation of the intermediate body fixed to one of the blades.

Each feeder bar is therefore forced by the pins fixed to it, lodged in the channel-shaped guide, to follow movement of that portion of blade which is aligned with said bar.

An unloading deivce, associated to the feeder, comprises an oblong plate fixed to an orthogonal shaft, or equivalent means, that rotates freely on the horizontally sliding support.

Rotation of said plate is determined by rotation of the intermediate body fixed to one of the blades.

A longitudinal edge of said plate is situated, a short distance from the blade, at the level of the cutting plane on the side opposite - in relation to the blade - to the feeder.

Moment by moment, therefore, said plate remains parallel to and at a short distance from the blade and collects and holds the pieces cut off.

Synchronized translation speed of the two blades, especially at the moment of cutting, rotation of the blades' intermediate bodies turning round a geometrical axis that lies orthogonally to the cutting plane, and the speed at which the sheets and band to be cut advance on the cutting plane, are regulated by pulses emitted by an electronic control unit.

Said control unit can be programmed as required for cutting at a constant angle, a series of the same cuts or varied ones, for producing differently shaped pieces such as rectangles, squares, rhomboids, trapezoids and others.

The invention clearly offers many advantages.

By manual controls or by using a program easily set in an electronic drive unit, a constant angle can be established on the cutting plane of the pair of blades for making a number of cuts at that angle or varying it as desired.

Different regular or irregular polygonal shapes can thus be cut, such as rectangles, rhomboids, triangles, trapezoids and many others.

The feeder device, feeding in bands laid side by side and parallel, whose ends are kept substantially in contact with the blades during the cut, following both their horizontal translation and their rotation, and the unloading device with its rectangular plate on the side opposite the feeder, substantially in contact with the blades while the cut is made, ensure a series of cuts at maximum speed, precision and safety, at whatever angle to the cutting plane the blades may be set.

All the above is obtained at high speed and great accuracy with cleanly sheared pieces, in runs either of the same shape or different shapes, with maximum flexibility and full compliance with varying needs.

Characteristics and purposes of the invention will be made still clearer by the following example of its execution illustrated by diagrammatically drawn figures.
- Fig. 1: Front view of the shearing machine partially cut away on the vertical longitudinal plane of symmetry, with the blades open.

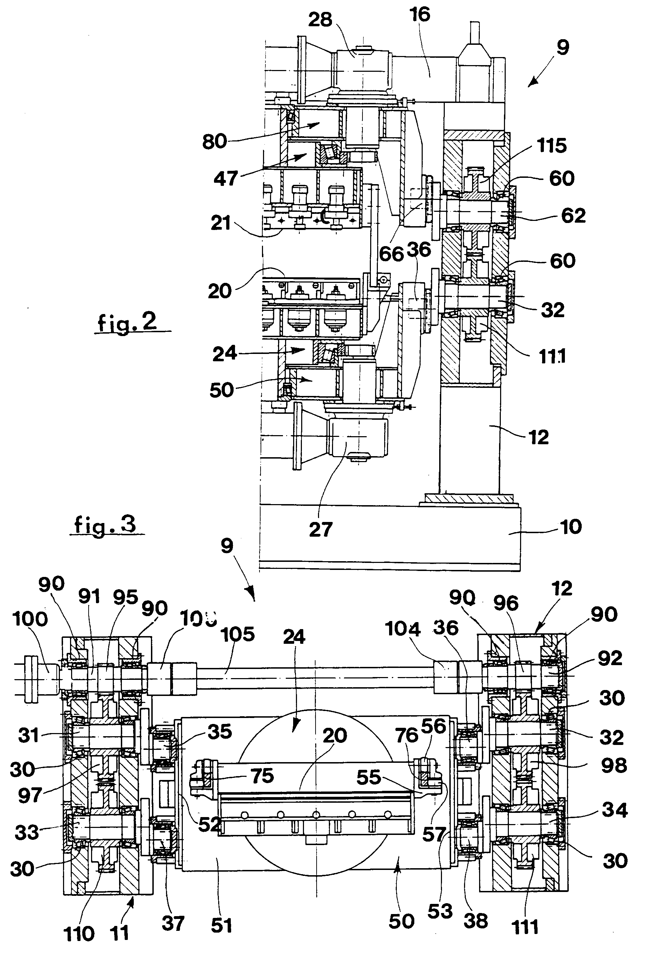

- Fig.2: Detail of the shearing machine cut through at the shafts of the front cranks (YY axis in Fig. 8).
- Fig. 3: The machine seen from above cut through a horizontal plane at the point of the lower cranks.
- Fig. 4: The machine seen from above cut through a horizontal plane at the point of the upper cranks.
- Fig. 5: The view in Fig.3 with the two blades rotated clockwise.
- Fig. 6: The view in Fig. 3 with the two blades rotated anti-clockwise.

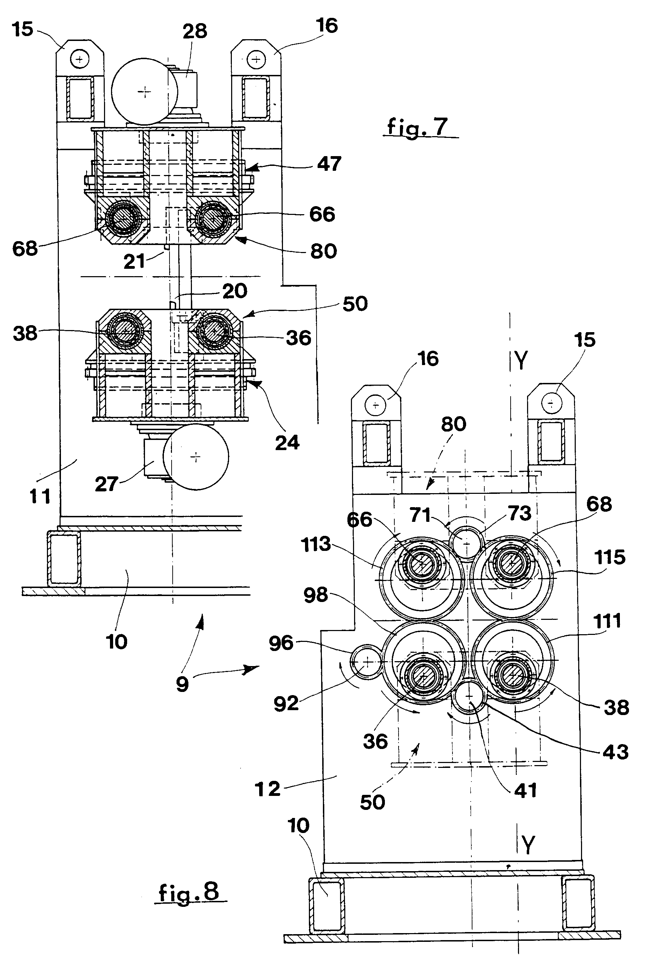

- Fig. 7: Lateral projection of a cross section of the shearing machine on the XX axis towards A (Fig. 1).
- Fig. 8: The same as Fig. 7 towards B (Fig. 1).
- Fig. 9: The machine in Fig. 1 with blades closed.
- Figs. 10 to 13.: Diagrams of blade movements.
- Fig.14: Cross section of the machine with continuous band feeder and unloader of material, in the position of parallel blades at the front of the machine.

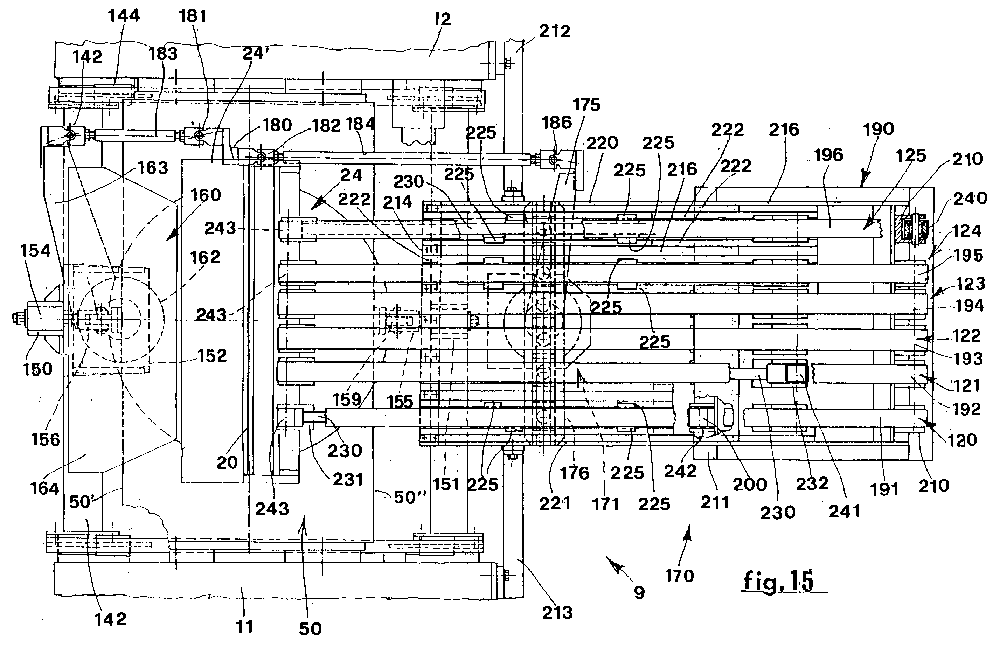

- Fig.15: The machine from above cut at a horizontal plane above the lower blade.

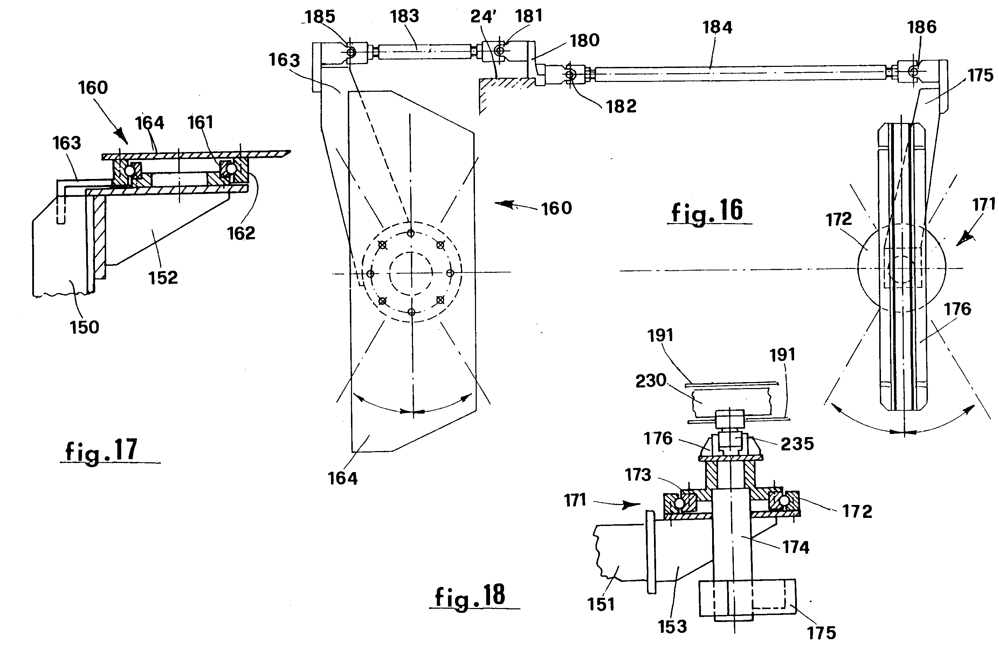

- Fig.16: Detail of the device for adjusting horizontal orientation of the unloader and feeder accordding to the angle assumed by the blades.
- Fig.17: Detail of the unloader.
- Fig.18: Detail of the feeder control unit.
- Fig.19: Detail of the device for guiding horizontal axial movement of the tubular bars that sustain the feeder's continuous bands.
- Fig.20: Detail of the tubular bars that sustain the feeder's continuous bands.
- Fig.21: Detail of the device that determines horizontal axial movement of the feeder's tubular bars.

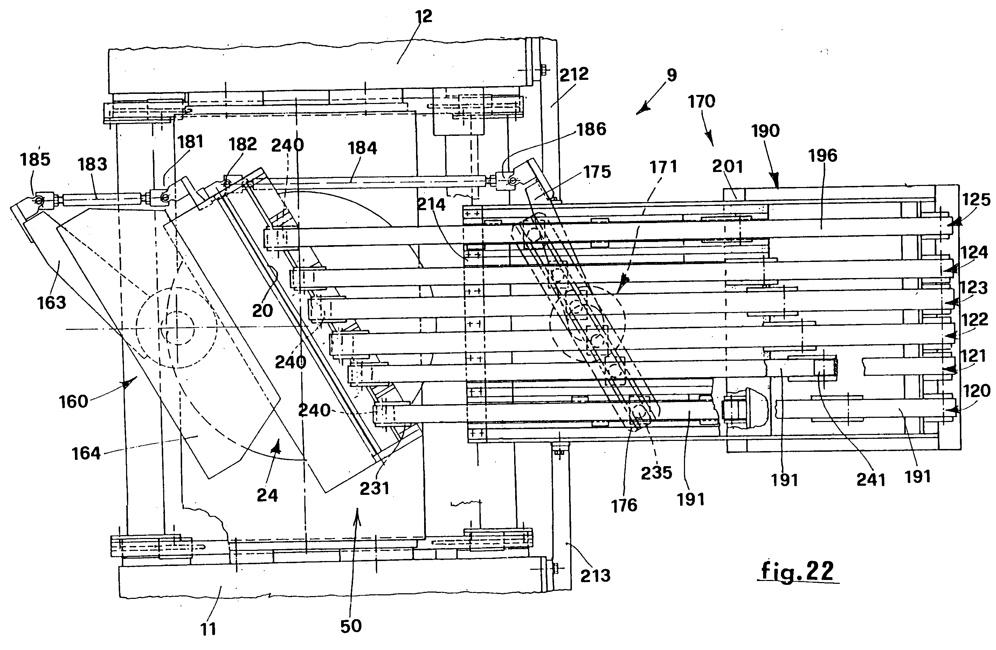

- Fig.22: The shearing machine in the projection in Fig.15 with the blades rotated anti-clockwise.

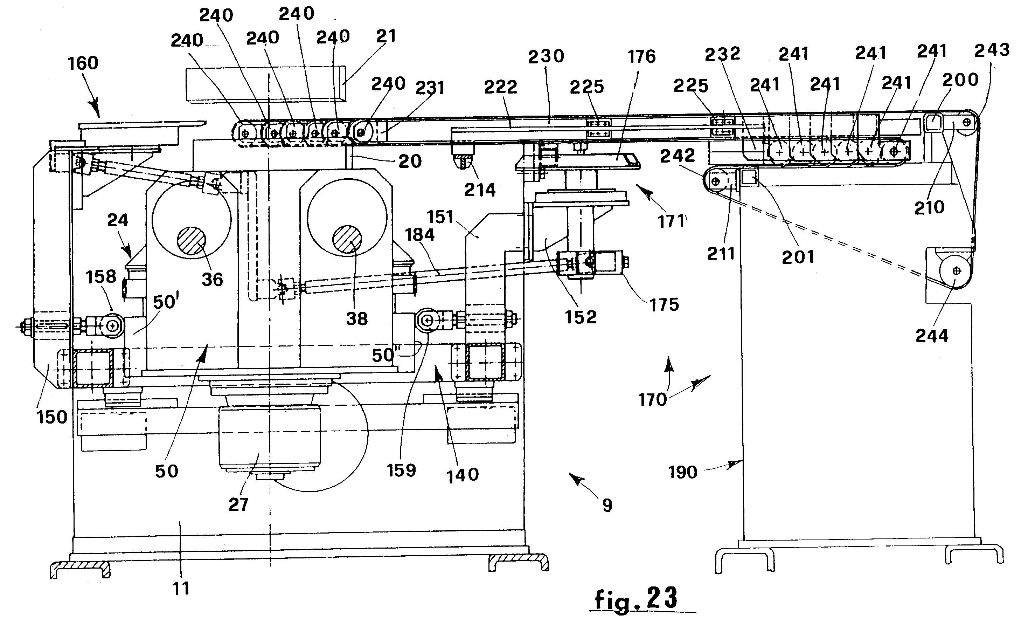

- Fig.23: The shearing machine as cut through in Fig. 14 with the blades rotated anti-clockwise.

The shearing machine subject of the invention comprises a base 10 and uprights 11 and 12 with sides 13, 14 joined above by heads 15, 16.

Low down, on bearings 30, said uprights support the pairs of shafts 31, 33 and 32, 34 respectively for the pairs of cranks 35, 37 and 36, 38 that determine alternating movement of the Lower blade 20 by means of the Structure 50 comprising the horizontal bar 51 and upward facing sides 52, 53.

Higher up, on bearings 60, said uprights 11, 12 support the pairs of shafts 61,63 and 62,64 respectively for the pairs of cranks 65, 67 and 66, 68 that determine alternating movement of the upper blade 21 by means of the structure 80 comprising the horizontal bar 81 and downward facing sides 82, 83.

Towards the rear, on bearings 90, the uprights support the shafts 91 and 92.

The small shaft 91 is joined by a coupling 100 to the drive unit 101 supported by the structure 102 and, by couplings 103 and 104 with the intermediate shaft 105, to the small shaft 92.

Said shafts 91 and 92 are respectively connected, by pinions 95, 96 and gear wheels 97, 98, to the short shafts 31 and 32 on the cranks 35, 36.

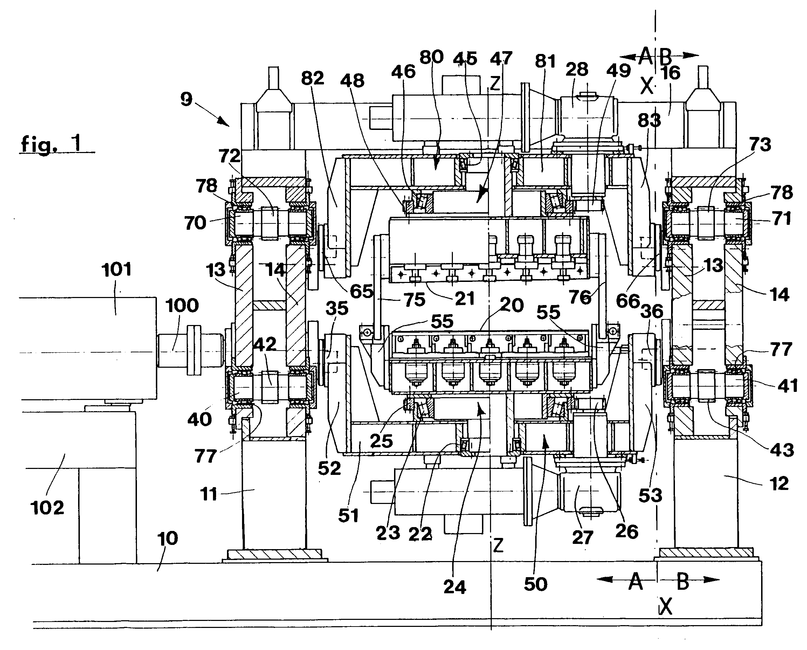

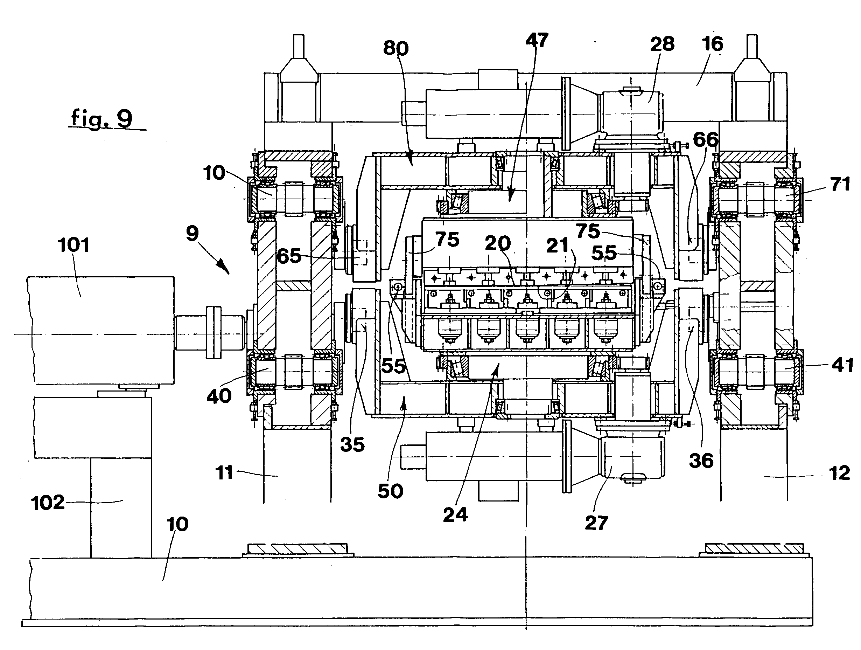

Said gear wheels 97, 98 are connected to gear wheels 110, 111, fixed to the shafts 33, 34 respectively for cranks 37 and 38 by pinions 42 and 43 on the shafts 40, 41 (Figs. 1 and 8) supported by bearings 77.

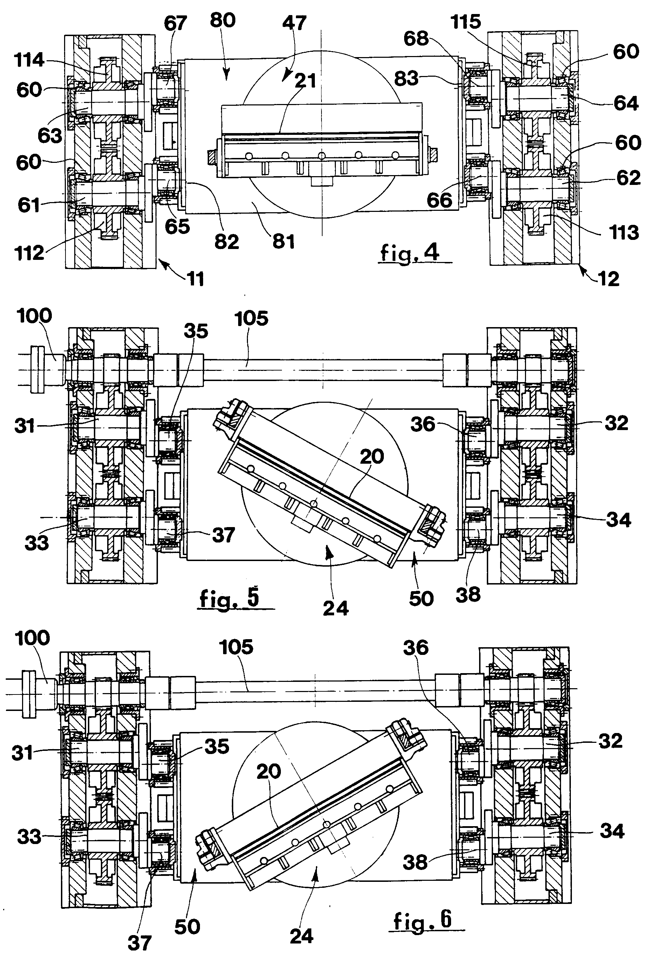

The rear-lower shafts 35 and 36 are connected to the rear-upper cranks 65, 66 (Figs. 1 and 4) respectively by gear wheels 97, 98 and 112, 113. Said cranks 65, 66 are connected to front-upper cranks 67, 68 by the pinions 72, 73 on shafts 70, 71 supported by the bearings 78 and gear wheels 114, 115.

These latter mesh similarly with gear wheels 110, 111 on the lower-front cranks 37, 38.

The lower blade 20 is fixed to the intermediate cylindrical body 24 supported by the structure 50 on roller bearings 22, 23.

Said body 24 comprises the gear 25 with which meshes the pinion 26 fixed to the shaft of the ratiomotor 27 mounted low down on the structure 50.

The upper blade 21 is fixed to the intermediate cylindrical body 47 supported by the structure 80 on roller bearings 45, 46. Said body 47 comprises the gear 48 on which meshes the pinion 49 fixed to the shaft of the ratiomotor 28 mounted higher up on the structure 80.

Laterally on the lower intermediate body 24 are pairs of supports 55 for the right-angled rollers 56, 57 which guide the pairs of vertical rods 75, 76 fixed to the two diametral side of the upper intermediate body 47.

As will be clear, on starting up the drive unit 101, the ratiomotors 27 for the lower blade 20, and 28 for the upper blade 21, the two blades 20 and 21 cyclically close and open for cutting metal bands and sheets at practically any angle in relation to the machine's plane of symmetry, making repeated cuts at the same angle or at angles subsequently set, as desired.

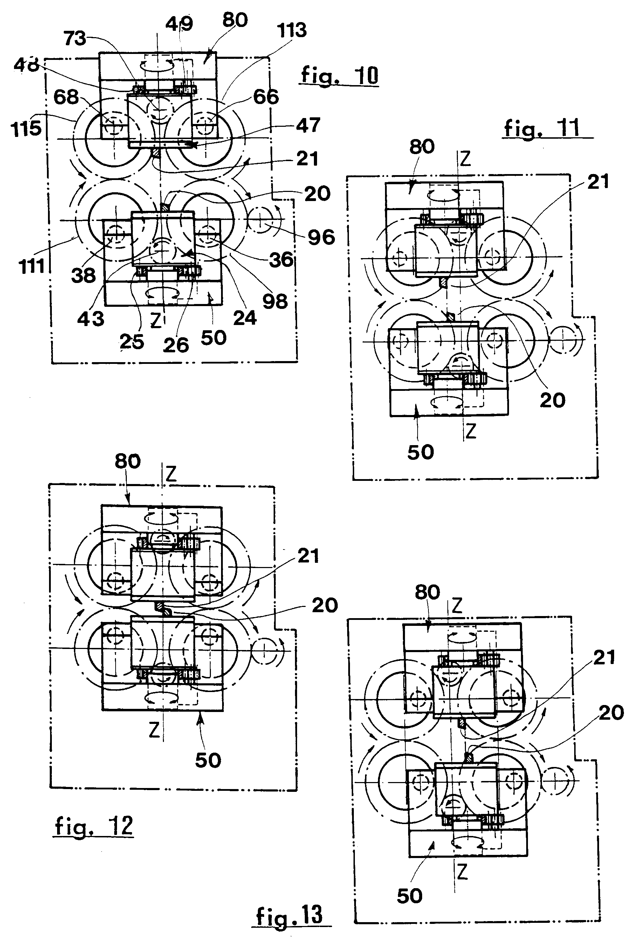

Figures 10-13 show the pairs of cranks 36, 38 and 66, 68 operating on structures 50 and 80 which, by means of the intermediate bodies 24 and 47, control blades 20 and 21.

The intermediate bodies can be made to rotate around the axis ZZ by means of pinions 26 and 49, fixed to the shafts of the ratiomotors, which act on the crown gears 25, 48 fixed to said intermediate bodies 24 and 47.

In Fig. 10 the blades are parted.

In Fig. 11 the blades are approaching each other.

In Fig. 12 the blades have come together.

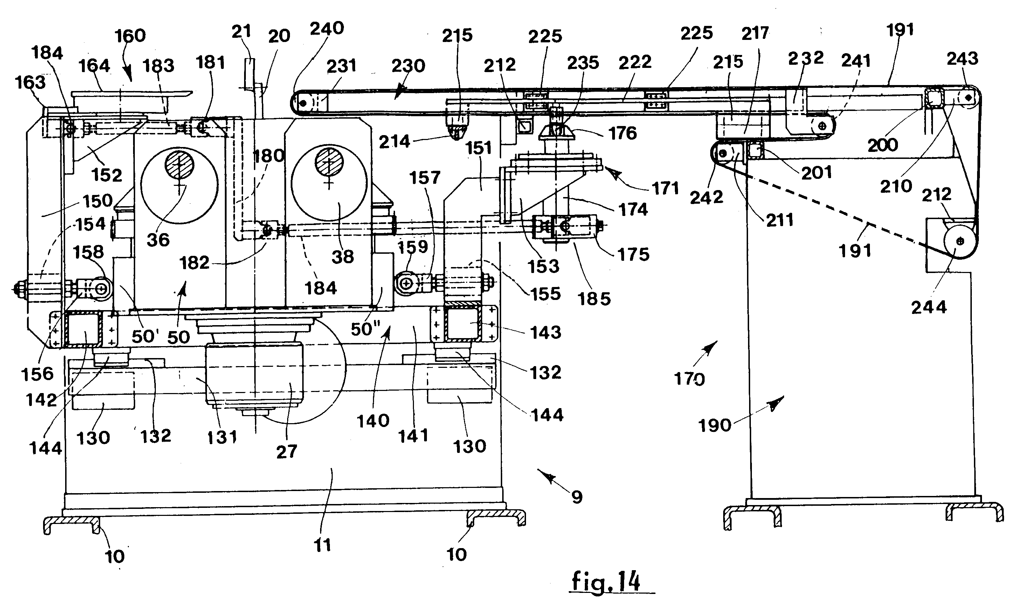

In Fig. 13 the blades are moving apart.

Here follows the description of an automatic feeding and unloading system which can with advantage be associated to the above shearing machine.

The uprights 11 and 12 in the shearing machine are provided with supports 130 to carry the cross bars 131 on which the pair of guides 132 are mounted.

On these guides the quadrangular frame 140 can slide, said frame being formed by transversal 141 and longitudinal 142, 143 bars by means of sliding blocks 144 below.

Roughly halfway along the longitudinal bars are placed the columns 150 and 151.

The bracket 152 is mounted at the top of column 150 to give support to the unloading means 160.

This bracket carries the roller bearing 161 for free rotation of the ring 162 to which the horizontal arm 163 and upper rectangular plate 164 are fixed.

In front of the shearing machine 9 the feeder 170 is situated to feed in bands and sheets for cutting.

The bracket to support the operative unit 171 of said feeder is mounted on the top of column 151.

Said bracket carries the roller bearing 172 for free rotation of the ring 173 to which the pin 174 is fixed.

Attached to said pin is the horizontal arm 175 and, above, the horizontal transversal U-shaped guide 176.

Lower down on said uprights 150, 151 are supports 154, 155 for the free horizontal pins of the forks 156, 157 and for the pins in the rollers 158, 159 that make contact against the sides 50' and 50'' of the structure 50 worked by the cranks 36, 38 and 35, 37.

Vertical movements of said structure do not affect the frame 140 since rollers 158 and 159 rotate freely.

Horizontal movements of said structure 50, on the contrary, cause longitudinal movement of the frame 140 and of the structure itself and therefore cause longitudinal movement of the rectangular plate 164 of the unloader 160 and of the horizontal U-shaped guide 176 of the feeder 170.

On one side 24' of the intermediate body 24 that carries the blade 20 is the small vertical bar 180 at whose upper end a coupling 181 is placed and, at the lower end,a coupling 182 connected by a strut 183 and by another strut 184 to the couplings 185 and 186 fixed at the ends of the arms 163 and 175 respectively.

Therefore, rotation of the intermediate body 24 together with the upper intermediate body 47 that carries the blade 21 to create an angle on the horizontal geometrical planes of said blades 20 and 21, similarly determines rotation of the plate 164 of the unloader 160 and of the U-shaped guide 176 of the feeder.

Said feeder comprises a bed 190 and a set of oblong supporting devices 120-125 comprising continuous parallel bands 191-196 placed side by side that form a horizontal geometrical plane.

At the top of this bed is the front cross piece 200 fitted with brackets 210 for a set of six pulleys 243, and the rear cross piece 201 fitted with brackets 211 for a Set of six pulleys 242.

The ratiomotor 228, placed at a lower level than that of the pulleys 243, has a transversal shaft that carries six pulleys 244 whose diameters are greater than those of the pulleys 242 and 243.

On the front edges of the lateral uprights 11 and 12 of the shearing machine 9, aligned and horizontal transversal brackets 212 and 213 are placed to sustain the longitudinal parallel oblong shoulders 220 and 221.

Said shoulders support at the end that projects close to the blades 20 and 21, a cross bar 214 on supporting bars 215.

On said bar 214 the supports 216 are fixed in the spaces between the bands 191-196.

The supporting bars 215 and 216 carry a pair of lateral opposing projecting guides 222 on which bearings 225 can freely slide, a pair of bearings being mounted to the sides of each of six longitudinal tubular bars 230, laid side by side and corresponding to the six continuous bands 191-196.

Supports 217 are placed on the bed 190 to sustain the other ends of the shoulders 220, 221 and of the supporting bars 215, 216.

At the ends facing the shears the bars 230 exhibit a set of supports 231 for six idling pulleys 240, one beside the other, and at the front end a set of six arms 232 for six pulleys 241.

In a substantially central position said bars 230 exhibit on their lower sides, a set of six downward facing pins 235 with rollers 236 lodged in the U-shaped guide channel 176 supported by the control unit 171.

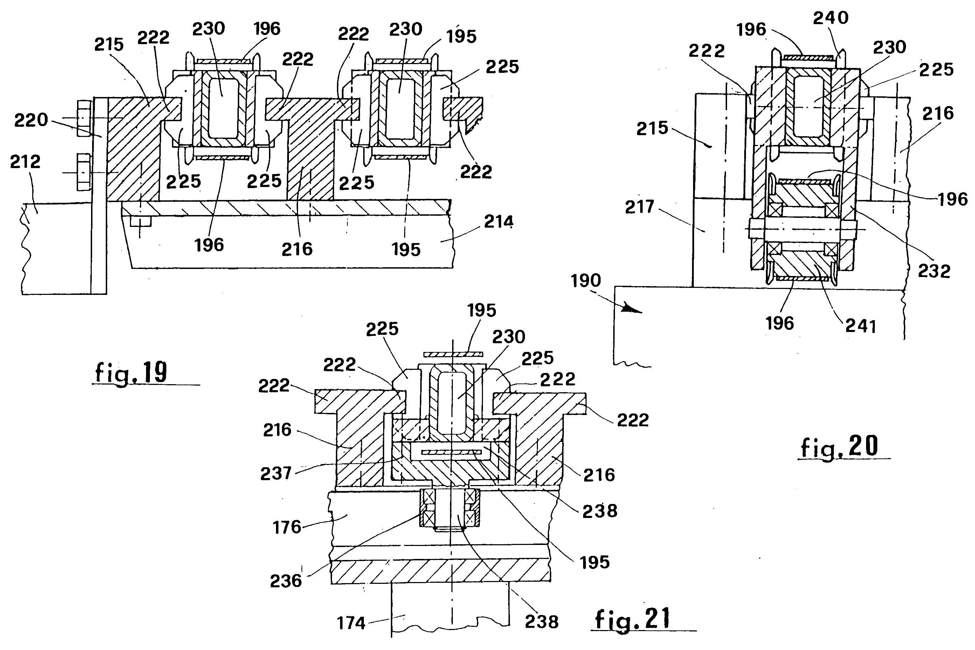

Said pins 235 are connected to the tubular bars 230 by the forks 237 that allow passage, on their inside 238 of the bands 191-196 (Fig. 21).

Therefore, when the transversal U-shaped guide 176 rotates in synchrony with the blades, said bars 230 lie flat with their rear ends aligned with the vertical geometrical plane of the blades whose clockwise and anti-clockwise angles they then follow.

Widths and centre distances of the set of pulleys 240-244 are substantially equal.

Pulleys 240, 242-244 are placed inside the bands 191-196.

The pulleys 241 are placed externally to said bands.

In view of the above, the bands 191-196 permit axial movement of the tubular bars 230 supporting the pulleys 240, 241, to follow the angles made by the blades since the lengthening of an area of band that surrounds pulleys 240 is compensated for by a shortening of the area of bands that surround pulleys 241, this without variation in the pull exerted by said bands round the sets of pulleys 240-244.

Therefore, when the ratiomotor is in motion the bands will run in conditions of constancy irrespective of the longitudinal positions of the pins 235 lodged within the U-shaped guides 176 as a consequence of translation of the structure 50 and therefore of the blades, and of the angular position of said guide when, due to rotation of the intermediate bodies 24 and 47, the blades lie on horizontal planes.

There is thus continuous feed of sheets and of bands to be cut right up to a short distance from the blades during their longitudinal movement and their angular movement.

Similarly, by means of the plate 164, which also follows the longitudinal and rotary movements of the blades, the cut pieces are guided and carried away for unloading at a short distance from said blades.

## Claims

1. Guillotine shearing machine (9) having a pair of two opposing blades (20,21), a lower blade (20) and an upper one (21) respectively fixed to a lower structure (50) and to an upper structure (80), translating in synchrony each parallel to itself and to the opposite blade describing equal circular trajectories around geometrical axes lying on the same vertical plane, meeting each other close to the cutting plane where the sheets to be cut are placed or translate
characterized in that the blades (20,21) are fixed to the translating structure (50,80) by intermediate motor-driven bodies (24,27;28,47) revolving in synchrony round the same geometrical axis orthogonal to the cutting plane, it being thus possible to orientate the cut as desired on the cutting plane at a constant angle for a series of cuts or at a varied angle, said cutting plane being formed of a feeder (170) comprising a series of oblong supporting devices (120-125), parallel and set side by side, free to move axially controlled by kinematic means synchronized with the structures (50,80) that determine horizontal translation of the blades (20,21), synchronized with the intermediate motor driven bodies (24,47) that determine rotation of said blades, which kinematic means determine axial movement of said oblong devices (120-125) so that the edge of the cutting plane close to the blades, so obtained, lies parallel from one moment to the next to the edge of the blades when the cut is made, the effect of this being to support the material placed for cutting close to the blades but without interfering with the blades themselves.

2. Guillotine shearing machine (9) as in claim 1
characterized in that rotation of the intermediate body (24,47) is determined by an electric ratiomotor (27,28) operated by an electronic control unit containing the desired program.

3. Guillotine shearing machine (9) as in claim 1,
characterized in that the two translating structures (50,80) to which the two blades, upper (21) and lower (20) are respectively fixed, are shaped substantially in the form of a "U" placed longitudinally, with a central horizontal bar (51,81) and vertical sides (52,53; 82,83), said sides facing upward in the structure (50) carrying the lower blade (20) and facing downward in the structure (80) carrying the upper blade (21), the intermediate bodies (24,47) rotating on roller bearings (22,23;45,46) inserted between said intermediate bodies (24,47) and corresponding seats made in the central horizontal bars (51,81) of the structures (50,80), said intermediate bodies (24,47) being caused to rotate by electric ratiomotors (27,28) and a kinematic pair comprising a pinion (26,49) fixed to the shaft of the ratiomotors (27,28) and gears (25,48) fixed to said intermediate bodies (24,47).

4. Guillotine shearing machine (9) as in claim 1,
characterized in that the movement of each translating structure (50) (80) to which the two blades (20,21) are fixed, is obtained by two pairs of cranks, front and rear in relation to the front plane of the machine, one pair of cranks (35,37) (65,67) acting on one side of the structure (50) (80), the other pair (36,38) (66,68) acting on the other side of the structure (50 (80), the two cranks, front and rear in relation to the front plane of the machine, of each pair being connected one to another by gear wheels (97,110, 98,111;112,114, 113,115) fixed to said cranks and to an intermediate idling gear wheel (42,43;72,73) both axes of rotation of the two pairs of cranks that draw the translating structure (50),(80) lying on a single horizontal geometrical plane, the first pair (35,37) of cranks and the second pair (36,38) of the lower translating structure (50) being connected by gear wheels (95,96) one to another and to a longitudinal shaft (105), that ensures synchronized movement, in turn connected to an electric ratiomotor (101), the gear wheels (110,111) fixed to the front cranks (37,38) of the lower translating structure (50) meshing respectively with the gear wheels fixed to the front cranks (65,66) of the upper translating structure (80) and similarly the gear wheels (97,98) fixed to the rear cranks (35,36) of the lower translating Structure (50) meshing respectively with the gear wheels (114,115) fixed to the rear cranks (67,68) of the upper translating structure (80).

5. Guillotine shearing machine (9) as in claim 1,
characterized in that synchronization of rotation of the intermediate bodies (24,47) when turning fixed to the upper blade (21) and lower blade (20), is assured by small bars (75,76) fixed to the two sides of one (24) of said intermediate bodies and free to slide within guides (55) made in the two sides of the other intermediate body (47).

6. Guillotine shearing machine (9) as in claim 1,
characterized in that each of the oblong supporting devices (120-125) consists of feed bars (230) at whose ends towards the blades (20;21) is a pulley (240) and at whose other end is an arm (232) that supports a second pulley (241) placed lower down than the first,there being made at this latter end a frame (190) that supports a third pulley (242) at a horizontal distance comprised between the first pulley and the second, that supports a fourth pulley (243) at the same level as that of the first pulley (240) placed rearwards in relation to the second pulley (241) and supports a fifth pulley (244)at a level lower than that of the fourth pulley (243)fixed to the horizontal shaft of a ratiomotor (228) common to all the devices (120-125), there being placed around the first (240), third (242), fourth (243) and fifth (244) pulleys a continuous band (191-196) that surrounds the second pulley (241) externally it being thus possible for said bars (230) to make free axial translation since a lengthening of the part of band that surrounds the first pulley (240) causes a shortening of equivalent length of that part of the band that surrounds the second pulley (241), a feed mechanism (171) determining axial translation of said bars (230) in such a way that the first pulleys (240) are aligned, moment by moment, at the level of the cutting plane with the blades whose movements both of horizontal translation and of rotation they follow.

7. Guillotine shearing machine (9) as in claim 6
characterized in that the feed mechanism (171) comprises a channel-shaped guide (176) rectilinear and horizontal, open upwards, fixed to an orthogonal shaft (174) that freely rotates in a sliding horizontal support (140), pins (235) being freely lodged within said guide (176) said pins being fixed to the lower side of each of said bars (230), horizontal translation of said sliding support (140) being determined by the structure (50) that causes horizontal translation of the blades, rotation of the channel-shaped guide (176) being determined by rotation of the intermediate body (24) fixed to one (20) of the blades, in such a way that each of the feed bars (230) is forced by the pins (235), lodged in the channel-shaped guide (176), fixed to it to follow movement of that part of the blade (20) that is in a position corresponding to that of said bar (230).

8. Guillotine shearing machine (9) as in claims 1 and 6
characterized in that an unloader (160) is associated to the feeder (170), said unloader comprising an oblong plate (164) fixed to an orthogonal shaft or equivalent means (161) freely turning on the horizontally sliding support (140), rotation of said plate (164) being determined by rotation of the intermediate body (24) fixed to one of the blades (20), one longitudinal edge of said plate being at a short distance from the blade (20) at the level of the cutting plane on the side opposite, in relation to the blade, to the feeder (170) so that, moment by moment said plate (164) is kept parallel to,and at a short distance from,said blade to collect and carry the pieces cut off.

9. Guillotine shearing machine (9) as in claim 1
characterized in that the speed of synchronized translation of the two blades (20,21) especially at the moment when the cut is made, rotation of the intermediate bodies (24,47) of the blades around a geometrical axis orthogonal to the plane of cutting and forward speed of the bands and sheets to be cut when on the cutting plane are all regulated by pulses emitted by an electronic drive unit in accordance with a preferred program for making cuts at a constant angle for a series or at a different angle as desired to produce polygonal pieces of various shapes such as rectangles, squares, rhomboids, trapezoids and others.

## Patentansprüche

1. Tafelschere (9) mit zwei paarweise gegenüberliegenden Messern (20,21), und zwar einem unteren (20) und einem oberen (21), die jeweils fest an einer unteren Struktur (50) und einer oberen Struktur (80) sitzen und sich synchron parallel zu sich selbst und dem gegenüberliegenden Messer verstellen, wobei sie kreisförmige, gleiche Bahnen um geometrische Achsen beschreiben, die auf der gleichen senkrechten Fläche liegen und sich in der Nähe der Schnittfläche treffen, wo die zu schneidenden Folien liegen oder verlaufen,
dadurch gekennzeichnet, daß die Messer (20, 21) an den sich verstellenden Strukturen (50, 80) fest durch motorisierte Zwischenkörper (24, 27, 28, 47) verankert sind, die über dieselbe geometrische, rechtwinklig zur Schnittfläche verlaufende Achse synchron gedreht werden können, um die Durchführung des Schnitts zu ermöglichen, der nach Belieben auf der Schnittfläche mit einer für eine Reihe von Schnitten konstanten oder variierten Abwinklung ausgerichtet wird, wobei diese Schnittfläche durch eine Ladevorrichtung (170) erzielt wird, die eine Reihe länglicher Lagervorrichtungen (120-125) umfaßt, die parallel nebeneinander liegen und frei sind, achsial unter der Steuerung der Getriebe zu verlaufen, die mit den Strukturen (50-80), welche die horizontale Verstellung der Messer (20, 21) bewirken, sowie mit den motorisierten Zwischenkörpern (24, 27) synchronisiert sind, die die Drehung der Messer selbst verursachen, wobei diese Getriebe die achsiale Verstellung der besagten länglichen Vorrichtungen (120-125) zur Folge haben, so daß sich der so erzielte Rand der Schnittfläche in der Nähe der Messer fortwährend als parallel zu dem der Messer zum Zeitpunkt des Schnitts erweist, mit dem Ergebnis, daß das zu schneidende Material in der Nähe der Messer gehalten wird, ohne deswegen mit diesen zu interferieren.

2. Tafelschere (9) laut Anspruch 1),
dadurch gekennzeichnet, daß die Drehung der Zwischenkörper (24, 27) durch einen elektrischen Getriebemotor (27, 28) verursacht wird, der von einem beliebig programmierbaren elektronischen Steuergehäuse angetrieben wird.

3. Tafelschere 9 laut Anspruch 1),
dadurch gekennzeichnet, daß die beiden sich verstellenden Strukturen (50, 80), mit denen die beiden Messer, das obere (21) und das untere (20), fest verbunden sind, eine im wesentlichen "U"-förmige Zusammensetzung aufweisen, die mit einem mittleren, horizontalen Träger (51, 81) und senkrechten Seiten (52-53, 82-83) längs angeordnet ist, wobei diese Seitenteile in der Struktur (50) nach oben gerichtet sind, die fest mit dem unteren Messer (20) verbunden ist und nach unten in der Struktur (80), die fest mit dem oberen Messer (21) verbunden ist, die Zwischenkörper (24, 27) sich auf Lagern (22, 23; 45, 46) drehen und die besagten Seitenteile zwischen diesen Zwischenkörpern (24, 27) liegen, wobei entsprechende Sitze an den waagerechten Trägern (51, 81) der Strukturen (50, 80) angeordnet sind, da die Drehung dieser Zwischenkörper (23, 27) durch elektrische Getriebemotoren (27, 28) und ein Getriebepaar erzielt wird, das einen Ritzel (26, 49) umfaßt, der einteilig mit der Welle der Getriebemotoren (27, 28) ist, sowie Zahnkränze (25, 48), die einteilig mit diesen Zwischenkörpern (23, 47) sind.

4. Tafelschere 9 laut Anspruch 1),
dadurch gekennzeichnet, daß die Bewegung jeder einzelnen, sich verstellenden Struktur (50), (80), mit der die beiden Messer (20, 21) fest verbunden sind, durch zwei Paare im Verhältnis zur vorderseitigen Fläche der Maschine vordere und hintere Kurbeln erzielt wird, wobei ein Kurbelpaar (35, 37) (65, 67) an einer Seite der Strukturen (50), (80),und das andere Paar (36, 38), (66, 68) an der anderen Seite der Strukturen (50), (80) arbeitet und die beiden vorderen und hinteren Kurbeln im Verhältnis zur vorderseitigen Fläche der Maschine miteinander durch Zahnräder (97, 110, 98, 111; 112, 114, 113, 115) verbunden sind, die einteilig mit den Kurbeln selbst sind, sowie mit einem Leerlauf-Zwischenzahnrad (42, 43; 72, 73), wobei beide Umdrehungsachsen der beiden Kurbelpaare (35, 37, 36, 38) (65, 67), (66, 68), die die verstellbaren Strukturen (50) (80) schleppen, sich auf derselben geometrischen, horizontalen Fläche befinden, da das erste Kurbelpaar (35, 37) und das zweite Kurbelpaar (36, 38) der unteren verstellbaren Struktur (50) durch Zahnräder (95, 96) miteinander und mit einer Längswelle (105) verbunden sind, die deren synchrone Bewegung garantiert und die wiederum an einem elektrischen Getriebemotor (101) angeschlossen ist, wobei die Zahnräder (110, 111), die fest mit den vorderen Kurbeln (37, 38) der verstellbaren unteren Struktur (50) verbunden sind, jeweils in die Zahnräder eingreifen, die fest mit den vorderen Kurbeln (65, 66) der verstellbaren oberen Struktur (80) verbunden sind, und ebenso die Zahnräder (97, 98) fest mit den hinteren Kurbeln (35, 36) der verstellbaren unteren Struktur (50) verbunden sind, die jeweils in die Zahnräder (114, 115) greifen, die fest mit den hinteren Kurbeln (67, 68) der verstellbaren oberen Struktur (80) verbunden sind.

5. Tafelschere 9 laut Anspruch 1),
dadurch gekennzeichnet, daß die Synchronie der Umdrehungen der Zwischenkörper (24, 47), die zusammen mit den oberen (21) und den unteren Messern (20) gedreht werden können, durch Stangen (75, 76) garantiert wird, die an den beiden Seiten eines (24) dieser Zwischenkörper befestigt und frei sind, im Innern von Führungen (55) zu verlaufen, die an den beiden Seiten des anderen (47) Zwischenkörpers angeordnet sind.

6. Tafelschere 9 laut Anspruch 1),
dadurch gekennzeichnet, daß jede dieser länglichen Lagervorrichtungen (120-125) aus Speisestangen (230) besteht, die an dem den Messern (20, 21) zugewendeten Ende eine Riemenscheibe (240) und am anderen Ende einen Arm (232) aufweisen, der eine zweite, niedriger als die erste liegende Riemenscheibe (241) trägt, wobei an diesem letzten Ende ein Gestell (190) angeordnet ist, das eine dritte Riemenscheibe (242) in horizontaler Entfernung zwischen der ersten und der zweiten Riemenscheibe, eine vierte Riemenscheibe (243) auf der gleichen Höhe wie die erste Riemenscheibe (240), zurückgestellt im Vergleich zu der zweiten Riemenscheibe (241) und eine fünfte Riemenscheibe (244) trägt, die niedriger liegt als die vierte Riemenscheibe (242), welche einteilig mit der horizontalen Welle eines Getriebemotors (228) ist, der allen Vorrichtungen (120-125) gemein ist, da er um die erste (240), dritte (242), vierte (243) und fünfte (244) Riemenscheibe des laufenden Bands (191-196) angeordnet ist, das von außen die zweite Riemenscheibe (241) umschließt, wodurch die freie achsiale Verstellung der besagten Stangen (230) ermöglicht wird, da sich bei Verlängerung desjenigen Bandteils, das die erste Riemenscheibe umschließt (240), eine Verkürzung um die gleiche Länge desjenigen Bandteils ergibt, das die zweite Riemenscheibe (241) umschließt, wobei ein Speisegetriebe (171) dafür sorgt, daß die achsiale Verstellung der besagten Stangen (230) so erfolgt, daß die ersten Riemenscheiben (240) fortwährend auf der Höhe der Schnittfläche mit den Messern ausgerichtet sind und deren Verschiebungen sowohl in Bezug auf horizontale Verstellung wie Umdrehung folgen.

7. Tafelschere laut Anspruch 6),
dadurch gekennzeichnet, daß das Speisegetriebe (171) eine Führung mit geraden,, horizontalem Kanal (176) umfaßt, der nach oben hin offen und fest mit einer Welle (174) verbunden ist, die rechtwinklig und in einem horizontalen Gleitlager (140) frei drehbar ist, wobei in dieser Führung (176) Zapfen (235) frei gelagert sind, die fest am unteren Teil jeder einzelnen dieser Stangen (230) verankert sind, wodurch die horizontale Verstellung des besagten Gleitlagers (140) fortwährend von der Struktur (50) verursacht wird, die die Horizontalverstellung des Messers (20) bewirkt, und die Drehung der Kanalführung (176) durch die Drehung des Zwischenkörpers verursacht wird, (24), der einteilig mit einem (20) der Messer ist, so daß jede der Zufuhrstangen (230) von den mit ihr einteiligen Zapfen (235), die in der Kanalführung (176) angeordnet sind, gezwungen werden, der Verstellung desjenigen Messerteils (20) zu folgen, das sich als in Übereinstimmung mit der Stange (230) selbst erweist.

8. Tafelschere laut den Ansprüchen 1) und 6),
dadurch gekennzeichnet, daß die Ladevorrichtung (170) mit einer Abladevorrichtung (160) gekoppelt ist, die ein längliches Flacheisen (164) umfaßt, das fest mit einer rechtwinkligen Welle oder einem gleichwertigen Mittel (161) verbunden und frei drehbar auf horizontal gleitbarem Lager (140) ist, wobei die Drehung dieses Flacheisens (164) durch die Umdrehung des Zwischenkörpers (24) bewirkt wird, der einteilig mit einem der Messer (20) ist, wobei ein längs verlaufender Rand dieses Flacheisens in geringer Entfernung vom Messer (20) auf der Höhe der Schnittfläche an der gegenüberliegenden Seite, im Verhältnis zum Messer und zur Ladevorrichtung (170), angeordnet ist, weswegen dieses Flacheisen (164) sich parallel und in geringer Entfernung vom Messer selbst hält und die abgeschnittenen Stücke einsammelt und trägt.

9. Tafelschere laut Anspruch 1),
dadurch gekennzeichnet, daß die Verfahrgeschwindigkeit zeitgleich mit den beiden Messern (20, 21), insbesondere beim Schneidevorgang, die Umdrehung der Zwischenkörper (24, 47) der Messer um eine geometrische, rechtwinklig zur Schnittfläche verlaufende Achse und die Vorschubgeschwindigkeit der zu schneidenden Bänder bzw. Folien auf der Schnittfläche durch die Impulse geregelt werden, die von einem elektronischen, beliebig programmierbaren Steuergehäuse für die Durchführung der Schnitte mit einer konstanten Abwinklung für eine Reihe von Schnitten bzw. beliebig variiert für die Erzielung, nach den Schnitten, auch von polygonalen Elementen verschiedener Formen, wie Rechtecke, Quadrate, Romben, Trapeze u.ä., abgegeben werden.

## Revendications

1. Cisaille à guillotine (9) à deux lames (20,21) opposées par couple, une inférieure (20) et une supérieure (21) respectivement solidaires d'une structure inférieure (50) et d'une structure supérieure (80), mues par translation en synchronie parallèlement à elles-mêmes et à la lame opposée décrivant les mêmes trajectoires circulaires autour d'axes géométriques situés sur le même plan vertical, se rencontrant à proximité du plan de découpage ou sont situées ou mues par translation les feuilles à couper
caractérisée par le fait que les lames (20, 21) sont rendues solidaires des structures mues par translation (50, 80) au moyen de corps intermédiaires (24, 27, 28, 47) motorisés, pivotant sur le même axe géométrique orthogonal au plan de découpage, en synchronie, pour consentir la réalisation du découpage orienté au gré de chacun sur le plan de découpage avec un angle constant pour une série de découpage ou bien varié, ce plan de découpage étant obtenu par un alimentateur (170) qui comprend une série de dispositifs oblongs de support (120 - 125) parallèles et juxtaposés libres de coulisser axialement sous la commande de cinétismes synchronisés avec les structures (50 - 80) qui déterminent la translation horizontale des lames (20, 21) et synchronisés avec les corps 24, 47) intermédiaires motorisés qui déterminent la rotation des lames elles-mêmes dont les cinétismes déterminent le mouvement axial de ces dispositifs oblongs (120 - 125) de sorte que le bord du plan de découpage à proximité des lames, ainsi obtenu, soit à chaque instant parallèle à celui des lames au moment du découpage avec l'effet de soutenir le matériau à couper à proximité des lames sans toutefois interférer avec celles-ci.

2. Cisaille à guillotine (9) conformément à la revendication 1),
caractérisée par le fait que la rotation des corps intermédiaires (24, 47) est déterminée par un motoréducteur électrique (27, 28) commandé par une centrale électronique programmable au gré de chacun.

3. Cisaille à guillotine (9) conformément à la revendication 1),
caractérisée par le fait que les structures (50, 80) mues par translation, auxquelles sont solidaires respectivement les deux lames supérieure (21) et inférieure (20), présentent une composition substantiellement en "U" disposée longitudinalement avec poutre centrale (51, 81) horizontale et joues verticales (52-53; 82-83), ces joues étant orientées vers le haut dans la structure (50) solidaire de la lame inférieure (20) et orientées vers le bas dans la structure (80) solidaire de la lame (21) supérieure, ces corps intermédiaires (24, 47) pivotant sur des roulements (22, 23; 45, 46) insérés entre ces corps intermédiaires (24, 47) et des sièges correspondants prévus à cet effet sur les poutres centrales horizontales (51, 81) des structures (50, 80), la rotation de ces corps intermédiaires (23, 47) s'obtenant au moyen de motoréducteurs électriques (27, 28) et un couple cinématique comprenant un pignon (26, 49) solidaire de l'arbre des motoréducteurs (27, 28) et des couronnes dentées (25, 48) solidaires de ces corps intermédiaires (23, 47).

4. Cisaille à guillotine (9) conformément à la revendication 1),
caractérisée par le fait que le mouvement de chacune des deux structures mues par translation (50), (80) auxquelles sont solidaires deux lames (20, 21), est obtenu au moyen de deux, couples de manivelles antérieurs et postérieurs, par rapport au plan frontal de la machine, un couple de manivelles (35, 37) (65,67) agissant sur une joue des structures (50), (80), l'autre couple (36, 38) (66,68) agissant sur l'autre joue des structures (50), (80), les deux manivelles étant à l'avant et à l'arrière, par rapport au plan frontal de la machine, de chaque couple, reliées entre elles par des roues dentées (97, 110, 98, 111; 112, 114, 113, 115) solidaires des manivelles elles-mêmes et d'une roue dentée intermédiaire (42, 43; 72, 73) baladeuse, les deux axes de rotation des deux couples de manivelles (35, 37, 36, 38) (65, 67), (66, 68) qui entraînent les structures (50), (80) mues par translation, étant situés sur un même plan géométrique horizontal, le premier couple (35, 37) de manivelles et le second couple de manivelles (36, 38) de la structure (50) inférieure mue par translation, étant reliés par des roues dentées (95, 96) entre eux et à un arbre longitudinal (105) assurant leur mouvement synchronisé, à son tour relié à un motoréducteur électrique (101), les roues dentées (110, 111) étant solidaires des manivelles antérieures (37, 38) de la structure inférieure mue par translation (50), s'enclenchant respectivement dans les roues dentées solidaires des manivelles antérieures (65, 66) de la structure supérieure (80) mue par translation, les roues dentées (97, 98) étant elles aussi solidaires des manivelles postérieures (35, 36) de la structure inférieure mue par translation (50) s'enclenchant respectivement dans les roues dentées (114, 115) solidaires des manivelles postérieures (67, 68) de la structure supérieure (80) mue par translation.

5. Cisaille à guillotine (9) conformément à la revendication 1),
caractérisée par le fait que la synchronie des rotations des corps intermédiaires (24, 47) tournant solidairement avec la lame supérieure (21) et celle inférieure (20) est assurée par les petites barres (75, 76) fixées des deux côtés d'un (24) de ces corps intermédiaires et libres de coulisser à l'intérieur de glissières (55) prévues sur les deux côtés de l'autre corps (47) intermédiaire.

6. Cisaille à guillotine (9) conformément à la revendication 1),
caractérisée par le fait que chacun des dispositifs oblongs de support (120-125) sont constitués par des barres (230) d'alimentation qui, sur l'extrémité orientée vers les lames (20, 21) présentent une poulie (240) et sur l'autre extrémité un bras (232) supportant une seconde poulie (241) située à une cote inférieure à la première, étant prévu, en correspondance de cette dernière extrémité, un bâti (190) supportant une troisième poulie (242) à une distance horizontale comprise entre la première et la seconde poulie, supportant une quatrième poulie (243) à la même cote que la première poulie (240) en position plus reculée par rapport à la seconde poulie (241) et supportant une cinquième poulie (244) à une cote plus basse que la quatrième poulie (242) solidaire de l'arbre horizontal d'un motoréducteur (228) commun à tous les dispositifs (120 - 125), étant disposé autour de la première (240), de la troisième (242), de la quatrième (243) et de la cinquième (244) poulie de bande continue (191-196) qui entoure extérieurement la seconde poulie (241), rendant ainsi possible la translation axiale libre de ces barres (230) étant donné que lors de l'allongement de la partie de la bande entourant la première poulie (240), un raccourcissement de la partie de bande entourant la seconde poulie (241) a lieu, un cinétisme d'alimentation (171) déterminant ainsi la translation axiale de ces barres (230) de manière à ce que les premières poulies (240) soient à chaque instant alignées avec les lames, à la hauteur du plan de découpage, en suivant leurs mouvements aussi bien de translation horizontale que de rotation.

7. Cisaille à guillotine conformément à la revendication 6),
caractérisée par le fait que le cinétisme d'alimentation (171) comprend une glissière à gorge rectiligne horizontale (176) ouverte vers le haut solidaire d'un arbre (174) orthogonal tournant librement dans un support coulissant horizontal (140), des axes (235) solidaires de la partie inférieure de chacune de ces barres (230) étant librement logés dans cette glissière (176), la translation horizontale de ce support coulissant (140) étant déterminée à chaque instant par la structure (50) qui détermine la translation horizontale de la lame, (20), la rotation de la glissière (176) rainurée étant déterminée par la rotation du corps intermédiaire (24) solidaire d'une (20) des lames, de sorte que chacune des barres (230) d'alimentation est obligée par les axes (235) qui lui sont solidaires, logés dans la glissière rainurée (176), de suivre le mouvement de la portion de lame (20) qui se trouve en correspondance de la barre (230) elle-même.

8. Cisaille à guillotine conformément à les revendications 1 et 6),
caractérisée par le fait que l'alimentateur (170) est associé à un déchargeur (160) comprenant un plateau (164) oblong solidaire d'un arbre orthogonal ou d'un moyen équivalent (161), tournant librement sur le support (140) à coulissage horizontal, la rotation de ce plateau (164) étant déterminée par la rotation du corps intermédiaire (24) solidaire d'une des lames (20), un bord longitudinal de ce plateau étant placé à courte distance de la lame (20) à la hauteur du plan de découpage de la partie opposée, par rapport à la lame, à l'alimentateur (170) de sorte qu'à chaque instant ce plateau (164) reste parallèle et à courte distance de la lame elle-même et qu'il ramasse et supporte les pièces tranchées.

9. Cisaille à guillotine conformément à la revendication 1),
caractérisée par le fait que la vitesse de translation en synchronie des deux lames (20, 21) en particulier au moment du découpage, la rotation des corps intermédiaires (24, 47) des lames autour d'un axe géométrique orthogonal au plan de découpage et la vitesse d'avancement des rubans et des feuilles à couper sur le plan de découpage, sont réglées par des impulsions émises par une centrale électronique programmable au gré de chacun pour la réalisation de découpages avec un angle constant pour une série de découpages ou varié au gré de chacun en vue d'obtenir après le découpage, également des éléments polygonaux de formes différentes tels des rectangles, des carrés, des losanges, des trapèzes et autre.
